# EUROPEAN PATENT SPECIFICATION

(11) **EP 0 500 628 B1**
(45) Date of publication and mention of the grant of the patent: **05.04.1995**
(21) Application number: 90916303.2
(22) Date of filing: 15.11.1990
(51) Int. Cl.: G02B 6/44

(54) **A METHOD OF AND AN APPARATUS FOR PRODUCING AN OPTICAL MULTI-FIBRE CABLE ELEMENT**
METHODE UND APPARATUR ZUR HERSTELLUNG EINES KABELELEMENTS MIT MEHREREN OPTISCHEN FASERN
PROCEDE ET APPAREIL SERVANT A FABRIQUER UN ELEMENT DE CABLE A PLUSIEURS FIBRES OPTIQUES

(30) Priority: 17.11.1989 FI 895497
(43) Date of publication of application: 02.09.1992
(73) Proprietor: NOKIA-MAILLEFER HOLDING S.A., 1024 Ecublens-Lausanne (CH)
(72) Inventor: PÄIVINEN, Teuvo, SF-04330 Lahela (FI)
(74) Representative: Howden, Christopher Andrew
(86) International application number: FI9000276
(87) International publication number: WO9107679

(56) References cited:
- FI-B- 0 075 940

## Description

This invention relates to a method of producing an optical multi-fibre conductor element provided with a secondary sheathing, comprising
- extruding a secondary sheathing loosely around a fibre bundle of several optical fibres;
- providing the fibres with a desired extra length with respect to the secondary sheathing; and
- reeling a secondary-sheathed conductor element so obtained onto a receiving reel.

In the production of a conductor element comprising optical fibres, it is important that the length of the fibres is made greater than that of the sheathing in the secondary sheathing step in order that the fibres would not be exposed to disadvantageous strains when the conductor element is bent or reeling or installation.

Finnish Patent Specification 75 939 (NOKIA) discloses one simple way of providing an extra length by stretching the secondary sheathing with a stretching device, whereby the optical fibres remain longer when the sheathing returns to its original length after the stretching. The stretching device comprises a drawing means which draws the sheathing loosely surrounding the fibres from an extruder, and a locking wheel around which the sheathing together with the fibres is passed at a speed slightly greater than at the drawing means. On the locking wheel the fibres are positioned against the inside of the sheathing, so that the sheathing is stretched between the drawing means and the locking wheel while the fibres slide axially with respect to the sheathing.

In the production of optical multi-fibre conductor elements, the locking wheel, however, causes variation in the length of the fibres as the turning radius of the fibres around the wheel varies. This is because the fibres which are passed through the extruder in parallel with each other are always passed onto the periphery of the idler wheel in the same order with respect to each other, that is, the same fibres are always positioned against the peripheral surface of the wheel, whereas the other fibres are always positioned upon the first-mentioned fibres, and as a consequence have a greater turning radius. As is well-known, such variation in the fibre length causes various disadvantages in the conductor element.

U.S. Patent 4,458,476 (SIEMENS) teaches one way of avoiding the problem caused by the variation in the fibre length in multi-fibre conductor elements. In the U.S. Patent, fibres in the fibre bundle are SZ twisted before the extrusion of the loose secondary sheathing around the fibres and before the sheathing is filled with grease. In the secondary-sheathed conductor element the fibres remain twisted to some extent, which ensures that the fibres have a greater length than the sheathing. However, the twisting device required for realizing this kind of method makes the secondary sheathing device complicated, long and slow. In addition, it is known that a few major disadvantages are caused by the twist remaining in the finished conductor element. The SZ twisting creates a torque in the fibres, which results in the formation of static strains. The middle rod around which the fibres are twisted brakes the sliding of the fibres, thus increasing friction and strains, whereby the differences between the strains of different fibres are increased with resultant variation in the fibre lengths and impairment of the technical properties of the conductor element.

Finnish Patent Specification 75 940 (NOKIA) teaches that the fibres in the fibre bundle will not be passed onto the locking wheel of the stretching device always in the same order with respect to each other when the order of the individual fibres in the fibre bundle which is passed into the extruder for providing it with a secondary sheathing is varied repeatedly in the step of forming the fibre bundle. In this way it is ensured that the fibres in the sheathed fibre bundle are passed onto the wheel in a continuously changing order, which compensates for the variation in the fibre length and improves the properties of the conductor element. However, the device required for realizing the method, i.e. for varying the order of the fibres, makes the sheathing equipment relatively complicated and expensive.

The object of the present invention is to provide a method for the production of an optical multi-fibre conductor element, which avoids the above-mentioned disadvantages and enables the fibres in the fibre bundle to be passed in parallel with each other into the extruder without any risk of the stretching device causing variation in the length of the fibres in the secondary-sheathed fibre bundle. This object is achieved by means of the method of the invention which is characterized in that
- the fibres in the fibre bundle are spread side by side before the extrusion of the secondary sheathing;
- the spread fibres are passed side by side around a wheel which acts to equalize their lengths; and
- the fibres are removed from the equalizer wheel while still positioned side by side and passed to the extrusion step.

The invention is based on the idea that individual fibres are locked on the equalizer wheel before the extrusion of the secondary sheathing to avoid variation in the length of the fibres in the sheathed conductor element. On leaving the starting reels, the fibres have approximately the same tension and pass over the equalizer wheel with the same tension over a short period of time, so that it is obvious that the fibres around which the secondary sheathing is extruded are of equal length. Between the equalizer wheel and the locking wheel of the stretching device there occurs variation in the tension of individual fibres as the fibres are positioned one upon another on the periphery of the locking wheel, so that the outer fibres stretch more than the inner fibres. This, however, does not cause variation in the length of the fibres, because the variation in the tension of the fibres disappears when the fibres are released from the locking wheel so that the fibres are of the same length as when they are passed on the equalizer wheel. The locking of the fibres according to the invention before the extrusion step causes the fibres to return to substantially equal length in spite of the momentary unequal stretching. Variation in the fibre length is thus restricted between the equalizer wheel and the locking wheel.

The method of the invention enables the fibres to be fed in parallel with each other inside the secondary sheathing, which is of great importance when aiming at a parallel spiral fibre configuration in so-called maxi tubes. It has proved that it is very difficult to attain a spiral configuration in a SZ twisted fibre bundle, and the firmness of the obtained fibre bundle is not such as desired. In the method of the invention, the initial tension of the fibres is not critical. With higher production rates and stiffer greases, ever increasing initial tensions are required in accurate control of the extra fibre length and variation in the fibre length.

The invention is also concerned with an apparatus for realizing the method, which apparatus is characterized by what is disclosed in claim 3.

The apparatus is very simple in structure, and does not require any external control or operation. It does not restrict the initial tension of the fibres as compared with central tube or secondary tube twisting machines.

In the following the invention will be described in greater detail with reference to the attached drawings, in which
Figure 1 is a schematic side view of the production of a secondary sheathing for a fibre bundle of an optical cable; and
Figure 2 is an enlarged, more detailed view of an equalizing device of one embodiment of the apparatus according to the invention,

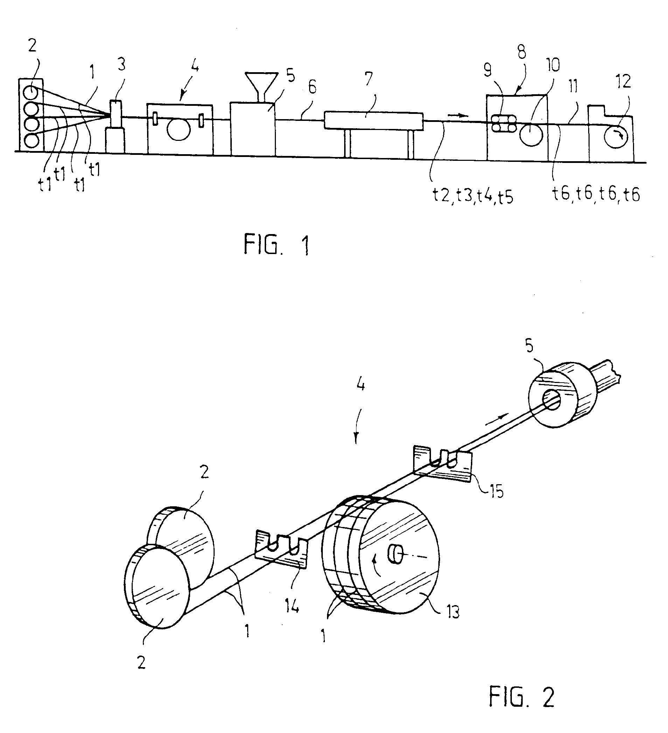

In Figure 1 of the drawings, a number of primary-sheathed fibres 1 are passed from fibre reels 2 through a collector 3 into an equalizing device 4 and further into an extruder 5. The secondary-sheathed fibre bundle 6 is then passed through a cooling chute 7 into a stretching device 8 to provide the fibres with an extra length with respect to the secondary sheathing. The stretching device comprises a braking means 9 and a locking wheel 10. Finally, a finished cable element 11 is wound on a reel 12.

The equalizing device 4 comprises an equalizer wheel 13 with a cylindrical peripheral surface, an inlet comb 14, and an outlet comb 15. The equalizer wheel is mounted rotatably on a support not shown. The fibre collector 3, the slits of the combs, the highest point of the equalizer wheel and the guide means before the extrusion head of the extruder are positioned substantially on the same line. The fibres are wound once around the equalizer wheel, and the combs spread the fibres in a plane apart from each other, so that each fibre is positioned against the peripheral surface of the equalizer wheel.

In this way the fibres are locked on the equalizer wheel so that they are not able to move in their axial direction with respect to each other on the wheel. On leaving the braked reels 2, the fibres have approximately the same tension, so that they are of substantially equal length when they are locked on the equalizer wheel, and are passed in parallel with each other inside the secondary sheathing. In the stretching device 8 the fibres are locked axially immovably to each other and to the secondary sheathing when they are passed around the locking wheel 10. As the fibres in the fibre bundle are positioned side by side and one upon another on the periphery of the locking wheel, variation will occur in the tension of the fibres between the equalizer wheel and the locking wheel. The fibres are, however, locked to the equalizer wheel, so that the tension differences will not go beyond the equalizer wheel, but the differences are levelled out and the length variation caused by these differences disappears when the fibres are released after the locking wheel.

In Figure 1, the tensions of the fibres advancing from the braked reels are indicated with the reference t1; these tensions are substantially equal before the equalizer wheel. Fibre tensions between the equalizer wheel and the locking wheel are indicated t2, t3, t4 and t5; these tensions may differ from each other. Fibre tensions after the locking wheel are indicated with the reference t6, and they are substantially equal.

It is noted that the apparatus of the invention compensates for variation in the tension of the fibres caused in the secondary sheathing step, so that a permanent variation in length is avoided in the secondary-sheathed fibre bundle.

The drawing and the description related to it are only intended to illustrate the idea of the invention. In their details, the method and the apparatus according to the invention may vary within the scope of the invention. As used in this connection, the word "fibre bundle" does not only refer to two or more fibres positioned separately in the same sheathing but also to a fibre bunch of two or more fibres bound together e.g. by gluing, by a binding thread or a binding hose. The secondary-sheathed optical conductor element may form a part of a multi-element cable (minitube structure), or it may be the basic element of a single-element cable (maxitube). In the multi-fibre cable element, the fibres may form a bundle, a bunch or several bunches.

## Claims

1. A method of producing an optical multi-fibre conductor element (11) provided with a secondary sheathing, comprising
- extruding (5) a secondary sheathing (6) loosely around a fibre bundle of several optical fibres (1);
- providing the fibres with a desired extra length (8) with respect to the secondary sheathing; and
- reeling the secondary-sheathed conductor element so obtained onto a receiving reel (12),
**characterized** in that
- the fibres (1) in the fibre bundle are spread (14, 15) side by side before the extrusion (5) of the secondary sheathing (6);
- the spread fibres are passed side by side around a wheel (13) which acts to equalize their lengths; and
- the fibres are removed from the equalizer wheel while still positioned side by side, and passed to the extrusion step (5).

2. A method according to claim 1, **characterized** in that the fibres (1) in the fibre bundle are spread (14, 15) in the same plane.

3. An apparatus for producing a secondary-sheathed optical multi-fibre conductor element (11), comprising
- an extruder (5) for extruding a secondary sheathing (6) loosely around a fibre bundle of several optical fibres (1);
- a stretching device (8) for providing the fibres with a desired extra length with respect to the secondary sheathing (6); and
- reeling means (12) for receiving the secondary-sheathed conductor element (11),
**characterized** in that
- the apparatus comprises means (14, 15) for spreading the fibres (1) in the fibre bundle so as to be positioned side by side;
- and a wheel (13) around which the fibres are arranged to be passed side by side so as to equalise their lengths said means for spreading and said wheel being positioned before the extruder (5).

4. An apparatus according to claim 3, **characterized** in that the spreading means (14, 15) are positioned on the path of the fibres (1) both before the equalizer wheel (13) and after it but before the extruder (5).

5. An apparatus according to claim 3 or 4, **characterized** in that the spreading means (14, 15) are comb-like and spread the fibres (1) in one common plane.

6. An apparatus according to any of claims 3 to 5, **characterized** in that the equalizer wheel (13) comprises a cylindrical peripheral surface for the fibres (1).

7. An apparatus according to any of the preceding claims, wherein the device (8) providing the extra length comprises a transfer means (9) for braking the secondary sheathing (6) and a locking wheel (10) around which the secondary sheathing (6) and the fibres are passed to lock the sheathing (6) and the fibre bundle axially immovably to each other, **characterized** in that the equalizer wheel (13) is arranged to receive the fibres (1) from braked fibre reels (2).

## Patentansprüche

1. Verfahren zum Erzeugen eines Leiterelements (11) mit mehreren optischen Fasern, das einen Sekundärmantel aufweist, mit den Schritten:
- einen Sekundärmantel (6) lose um ein Faserbündel mehrerer optischer Fasern (1) zu extrudieren (5);
- die Fasern mit einer gewünschten zusätzlichen Länge (8) bezüglich des Sekundämantels auszustatten; und
- das so erhaltene Leiterelement mit Sekundärmantel auf eine Aufnahmetrommel (12) aufzuwickeln,
dadurch gekennzeichnet, daß
- die Fasern (1) im Faserbündel vor der Extrusion (5) des Sekundärmantels (6) nebeneinander ausgebreitet werden (14, 15);
- die ausgebreiteten Fasern nebeneinander um ein Rad (13) geführt werden, das ihre Längen aneinander angleicht; und
- die Fasern vom Angleichrad abgenommen werden, während sie noch nebeneinander angeordnet sind, und der Extrusionsstufe (5) zugeführt werden.

2. Verfahren nach Anspruch 1,
dadurch gekennzeichnet, daß die Fasern (1) im Faserbündel in ein und derselben Ebene ausgebreitet werden (14, 15).

3. Vorrichtung zum Erzeugen eines Leiterelements (11) mit Sekundärmantel und mehreren optischen Fasern, mit
- einem Extruder (5) zum Extrudieren eines Sekundärmantels (6) lose um ein Faserbündel mehrerer optischer Fasern (1);
- einer Reckeinrichtung (8), um die Fasern mit einer gewünschten zusätzlichen Länge bezüglich des Sekundärmantels (6) auszustatten; und
- einer Aufwickeleinrichtung (12) zum Aufnehmen des Leiterelements (11) mit Sekundärmantel,
dadurch gekennzeichnet, daß
- die Vorrichtung Einrichtungen (14, 15) aufweist, um die Fasern (1) im Faserbündel so auszubreiten, daß sie nebeneinander angeordnet sind;
- und ein Rad (13), um das die Fasern so angeordnet werden, daß sie nebeneinander verlaufen, um so ihre Längen anzugleichen, wobei die Einrichtungen zum Ausbreiten und das Rad vor dem Extruder (5) angeordnet sind.

4. Vorrichtung nach Anspruch 3,
dadurch gekennzeichnet, daß die Ausbreiteinrichtungen (14, 15) am Weg der Fasern (1) vor dem Angleichrad (13) und nach ihm, aber vor dem Extruder (5) angeordnet sind.

5. Vorrichtung nach Anspruch 3 oder 4,
dadurch gekennzeichnet, daß die Ausbreiteinrichtungen (14, 15) kammartig sind und die Fasern (1) in einer gemeinsamen Ebene ausbreiten.

6. Vorrichtung nach einem der Ansprüche 3 bis 5,
dadurch gekennzeichnet, daß das Angleichrad (13) eine zylindrische Umfangsfläche für die Fasern (1) aufweist.

7. Vorrichtung nach einem der vorhergehenden Ansprüche, bei der die für die zusätzliche Länge sorgende Einrichtung (8) eine Übertrageinrichtung (9) zum Bremsen des Sekundärmantels (6) und ein Festhalterad (10) aufweist, um das der Sekundärmantel (6) und die Fasern geführt werden, um den Mantel (6) und das Faserbündel axial unbeweglich zueinander festzuhalten,
dadurch gekennzeichnet, daß das Angleichrad (13) angeordnet ist, um die Fasern (1) von gebremsten Fasertrommeln (2) zu erhalten.

## Revendications

1. Procédé de fabrication d'un élément conducteur (11) à plusieurs fibres optiques ayant une gaine secondaire, comprenant :
- l'extrusion (5) d'une gaine secondaire (6) avec du jeu autour d'un faisceau de fibres comprenant plusieurs fibres optiques (1),
- l'incorporation aux fibres d'un excès de longueur voulu (8) par rapport à la gaine secondaire, et
- l'enroulement de l'élément conducteur ayant la gaine secondaire ainsi obtenu sur un rouleau récepteur (12),
caractérisé en ce que :
- les fibres (1) du faisceau de fibres sont étalées côte à côte (14, 15) avant l'extrusion (5) de la gaine secondaire (6),
- les fibres étalées sont transmises côte à côte autour d'une roue (13) qui assure l'égalisation de leurs longueurs, et
- les fibres sont retirées de la roue d'égalisation lorsqu'elles sont encore placées côte à côte et transmises à l'étape d'extrusion (5).

2. Procédé selon la revendication 1, caractérisé en ce que les fibres (1) du faisceau de fibres sont étalées (14, 15) dans le méme plan.

3. Appareil de fabrication d'un élément conducteur (11) à plusieurs fibres optiques ayant une gaine secondaire, comprenant :
- une extrudeuse (5) destinée à extruder une gaine secondaire (6) avec du jeu autour d'un faisceau de plusieurs fibres optiques (1),
- un appareil d'étirage (8) destiné à incorporer aux fibres un excès voulu de longueur par rapport à la gaine secondaire (6), et
- un dispositif d'enroulement (12) destiné à recevoir l'élément conducteur (11) ayant la gaine secondaire,
caractérisé en ce
- l'appareil comporte un dispositif (14, 15) destiné à étaler les fibres (1) du faisceau de fibres afin qu'elles soient placées côte a côte, et
- une roue (13) autour de laquelle les fibres sont destinées à passer côte à côte afin que leurs longueurs soient égalisées, le dispositif d'étalement et la roue étant disposés avant l'extrudeuse (5).

4. Appareil selon la revendication 3, caractérisé en ce que le dispositif d'étalement (14, 15) est disposé sur le trajet des fibres (1) à la fois avant la roue d'égalisation (13) et après elle mais avant l'extrudeuse (5).

5. Appareil selon l'une des revendications 3 et 4, caractérisé en ce que le dispositif d'étalement (14, 15) a une forme de peigne et étale les fibres (1) dans un plan commun.

6. Appareil selon l'une quelconque des revendications 3 à 5, caractérisé en ce que la roue d'égalisation (13) comporte une surface périphérique cylindrique pour les fibres (1).

7. Appareil selon l'une quelconque des revendications précédentes, dans lequel l'appareil (8) destiné à incorporer un excès de longueur comprend un dispositif (9) de transfert destiné à freiner la gaine secondaire (6), et une roue de blocage (10) autour de laquelle la gaine secondaire (6) et les fibres sont passées de manière que la gaine (6) et le faisceau de fibres soient bloqués axialement sous forme immobile mutuellement, caractérisé en ce que la roue d'égalisation (13) est destinée à recevoir les fibres (1) de rouleaux freinés (2) de fibres.
